# EUROPÄISCHE PATENTANMELDUNG

(11) **EP 2 770 018 A2**
(43) Veröffentlichungstag der Anmeldung: **27.08.2014**
(21) Anmeldenummer: 13001218.0
(22) Anmeldetag: 11.03.2013
(51) Int. Cl.: C08K 9/08

(54) **Kohlenstofffaserhaltige Partikel sowie deren Verwendung und Herstellung**

(30) Priorität: 20.02.2013 EP 13000863
(71) Anmelder: ELG Carbon Fibre International GmbH, 47138 Duisburg (DE)
(72) Erfinder: Gehr, Marco, D - 51789 Lindlar (DE)
(74) Vertreter: Von Rohr Patentanwälte Partnerschaft mbB

(57) **Zusammenfassung**

Die vorliegende Erfindung betrifft kohlenstofffaserhaltige Partikel, vorzugsweise in Form von Pellets oder Granulaten, welche sich insbesondere für die Herstellung von kohlenstofffaserhaltigen (Komposit-/Verbund-)Materialien, vorzugsweise kohlenstofffaserhaltigen Kunststoffen, eignen, sowie ein Verfahren zur deren Herstellung und deren Verwendung.

## Beschreibung

Die vorliegende Erfindung betrifft das technische Gebiet der Verbundstoffe (Compounds), insbesondere Verbundstoffe mit Kohlenstofffasern als vorzugsweise partikuläre Additive.

Insbesondere betrifft die vorliegende Erfindung kohlenstofffaserhaltige Partikel, insbesondere in Form von Pellets oder Granulaten, welche sich insbesondere für die Herstellung von kohlenstofffaserhaltigen Materialien, vorzugsweise kohlenstofffaserhaltigen Kunststoffen, insbesondere kohlenstofffaserhaltigen Komposit- oder Verbundmaterialien, eignen, und ein Verfahren zur deren Herstellung sowie deren Verwendung.

Verbundstoffe (synonym auch Compounds, Komposite oder Formmassen genannt) sind im Allgemeinen vorzugsweise homogene Mischungen aus insbesondere sortenreinen Grundstoffen, insbesondere Kunststoffen und Kunststoffmischungen, denen mindestens ein Zugschlagstoff, wie Füllstoffe, Verstärkungsstoffe oder Additive, beigemischt worden sind, um die Eigenschaften des Grundstoffs zu verbessern, insbesondere im Hinblick auf verbesserte Leistungsfähigkeit, geringere Kosten, vereinfachte Weiterverarbeitung und attraktiveres Erscheinungsbild. So können beispielsweise die UV-Beständigkeit und die Hydrolysebeständigkeit von Kunststoffen, welche für Bauteile im Außenbereich eingesetzt werden sollen, durch Beimischung von Stabilisatoren signifikant erhöht werden.

Als Füllstoffe werden insbesondere partikelförmige Stoffe, wie Talkum, Kreide, Glimmer (Mica), Bariumsulfat, Ruß, Keramikpulver, Metallpulver oder dergleichen, verwendet, welche das Volumen der Verbundstoffe erhöhen sollen, ohne jedoch die wesentlichen Eigenschaften zu ändern. Eine Erhöhung des Volumens ist insbesondere im Hinblick auf die Lager- und Transportkosten der Verbundstoffe wünschenswert.

Durch die Zugabe von Additiven, wie Antioxidantien, Gleitmitteln, Antistatika, Stabilisatoren, Lichtschutzmitteln, Trennmitteln, Entformungshilfen, Nukleierungsmitteln, UV-Absorbern, Flammschutzmitteln, Fluorpolymeren (z.B. PTFE), Pigmenten oder dergleichen, lassen sich die Eigenschaften des Grundstoffs gezielt auf die jeweilige Anwendung einstellen. Durch Additive können beispielsweise die Farbe oder die thermische und chemische Stabilität des Verbundstoffs eingestellt werden. Weiterhin führt die Zugabe von Verarbeitungshilfsstoffen zu einer verbesserten Weiterverarbeitung der Verbundstoffe in nachfolgenden Prozessen, wie Spritzgießen oder dergleichen.

Veränderungen der mechanischen Eigenschaften des Grundstoffs, insbesondere eine Schlagzähmodifzierung mechanischer Kenngrößen, wie Zugfestigkeit, Bruchdehnung und Schlagzähigkeit, kann insbesondere durch die Zugabe von Verstärkungsstoffen erreicht werden. Als Verstärkungsstoffe werden insbesondere Glasfasern, vorzugsweise in Form von sogenannten Kurz- und Langglasfasern, Kohlenstofffasern oder Wollastonit eingesetzt.

Verbundstoffe werden insbesondere durch sogenannte Compoundierung hergestellt, wobei die Compoundierung der Kunststoffaufbereitung entspricht und den Veredelungsprozess von Kunststoffen durch Beimischung von Zuschlagstoffen (z. B. Füllstoffen, Verstärkungsstoffen, Additiven etc.) zur gezielten Optimierung der Eigenschaften der Grundstoffe beschreibt. Im Allgemeinen umfasst die Compoundierung verschiedene Verfahrensstufen oder Verfahrensoperationen, wie Fördern, Aufschmelzen, Dispergieren, Mischen, Entgasen und Druckaufbau, und erfolgt insbesondere in Extrudern, beispielsweise gleichläufigen Doppelschneckenextrudern, gegenläufigen Doppelschneckenextrudern, Planetwalzenextrudern, Ko-Knetern etc.

Um eine möglichst homogene Mischung zwischen Grundstoffen einerseits und Zuschlagstoffen andererseits zu gewährleisten, sollten sich die Zuschlagstoffe im Rahmen der Compoundierung möglichst homogen in den Grundstoff einarbeiten lassen. Jedoch weisen die meisten der zuvor angeführten Zuschlagstoffe infolge ihrer schlechten Benetzbarkeit eine oftmals nur unzureichende Einarbeitbarkeit auf, so dass nicht vollständig homogene Verbundstoffe resultieren, welche aufgrund der inhomogenen Verteilung der Zuschlagstoffe keine gleichbleibenden Eigenschaften innerhalb des Verbundstoffes und damit eine nur unzureichende Qualität aufweisen.

Aufgrund der schlechten Einarbeitbarkeit der Zuschlagstoffe kann es darüber hinaus zu einer Entmischung von Grundstoff und Zuschlagstoffen kommen, so dass eine Herstellung des Verbundstoffs nicht ohne Weiteres möglich ist. Dies kann insbesondere dann der Fall sein, wenn hohe Mengen an verschiedenen Zuschlagstoffen verwendet werden, insbesondere wenn die Zuschlagstoffe signifikant abweichende Dichten in Bezug auf den Grundstoff, insbesondere den Kunststoff, aufweisen.

Die schlechte Einarbeitbarkeit der Zuschlagstoffe kann zwar durch die Anwendung von hohen Scherkräften verbessert werden; hierbei kann es jedoch zu einer teilweisen Zerstörung, insbesondere Zerkleinerung, der Zuschlagstoffe kommen. Insbesondere bei Verwendung von Versteifungsstoffen führt eine Zerkleinerung zu signifikant verschlechterten mechanischen Eigenschaften des Verbundstoffes.

Weiterhin führt die Einarbeitung von Zuschlagstoffen ihm Rahmen der Compoundierung oftmals zu einer negativen Beeinflussung der rheologischen Eigenschaften, insbesondere der Fließeigenschaften oder Fließraten. Jedoch ist eine Verminderung der Fließeigenschaften, insbesondere bei hohen Mengen an Zuschlagstoffen, für eine Weiterverarbeitung der Verbundstoffe von Nachteil, da für die nachfolgende Verarbeitung der Verbundstoffe z. B. in Spritzgussvorrichtungen oder dergleichen hohe Fließraten benötigt werden.

Auch weisen die Zuschlagstoffe aufgrund ihrer oftmals staubförmigen Beschaffenheit eine schlechte Handhabbarkeit auf. So müssen bei staubförmigen Zuschlagstoffen besondere Absaug- und Filteranlagen verwendet werden, um eine Gesundheitsgefährdung während der Herstellung und Verwendung der Zuschlagstoffe aufgrund der Staubentwicklung auszuschließen und um die Gefahr von Staubexplosionen zu vermeiden. Weiterhin kommt es aufgrund der staubförmigen Beschaffenheit auch zu einer verschlechterten Dosierbarkeit der Zuschlagstoffe, da die Zudosierung einer exakten Menge an Zuschlagstoff oder die Herstellung einer exakten Mischung von Zuschlagstoffen nicht gewährleistet ist. Für eine gleichbleibende Qualität der Verbundstoffe ist jedoch eine exakte Dosierbarkeit der Zuschlagstoffe von großer Bedeutung.

Um eine bessere Einarbeitbarkeit, Handhabbarkeit und Dosierbarkeit der Zuschlagstoffe zu erreichen, werden im Stand der Technik bisweilen auch Formkörper, insbesondere Agglomerate, Pellets, Briketts oder dergleichen, aus den betreffenden Zuschlagstoffen hergestellt. Die nach dem Stand der Technik hergestellten Formkörper liefern jedoch keine zufriedenstellenden Ergebnisse, da sie oftmals keine ausreichend homogene Einarbeitung in Grundstoffe, insbesondere Kunststoffe, ermöglichen, Auch führt die Einarbeitung der nach dem Stand der Technik bekannten Formkörper in Grundstoffe (z. B. Kunststoffe), insbesondere im Rahmen des Compoundierens, meist zu einer negativen Beeinflussung der rheologischen Eigenschaften, insbesondere der Fließeigenschaften, insbesondere bei hohen Mengen an Zuschlagstoffen, so dass Verbundstoffe resultieren, welche sich aufgrund ihrer geringen Fließrate nur schwer weiterverarbeiten lassen.

Weiterhin kann es aufgrund des hohen Anteils der zur Herstellung der Formkörper im Stand der Technik verwendeten Hilfsmittel (z.B. sogenannte Schlichtungsmittel etc.) zu Störungen innerhalb der Grundstoffmatrix, insbesondere Kunststoffmatrix, kommen, welche zu Materialfehlern innerhalb des Verbundstoffs führen können; auch kann es bei Verwendung der die Hilfsstoffe enthaltenden Formkörper des Standes der Technik zu Inkompatibilitäten mit dem verwendeten Grundstoff kommen, so dass die Formkörper nur für ganz bestimmte Grundstoffe verwendet werden können und nicht universell für eine große Vielzahl von Grundstoffen einsetzbar sind.

Die aus Zuschlagstoffen hergestellten Formkörper des Standes der Technik sind folglich in Bezug auf ihren industriellen Einsatz mit einer Vielzahl von Nachteilen verbunden, so dass eine erhöhte Nachfrage nach Formkörpern aus Zuschlagstoffen besteht, welche eine verbesserte Einarbeitbarkeit in unterschiedlichste Grundstoffe, insbesondere Kunststoffe, aufweisen, wobei die rheologischen Eigenschaften des resultierenden Verbundstoffs nicht signifikant beeinträchtigt werden sollen.

Der vorliegenden Erfindung liegt daher die Aufgabe zugrunde, für die Inkorporierung in Kunststoffe geeignete Zuschlagstoffe in gut handhabbarer Form, vorzugsweise in partikulärer Form, insbesondere in Form von Granulaten oder Pellets, bereitzustellen, wobei die zuvor geschilderten, mit dem Stand der Technik verbundenen Nachteile zumindest weitgehend vermieden oder aber wenigstens abgeschwächt werden sollen.

Insbesondere ist eine Aufgabe der vorliegenden Erfindung die Bereitstellung von Zuschlagstoffen auf Basis von Kohlenstofffasern in gut handhabbarer Form, vorzugsweise in partikulärer Form, insbesondere in Form von Pellets oder Granulaten, wobei eine gute Handhabbarkeit gewährleistet sein soll. Des Weiteren soll eine gute Einarbeitbarkeit bzw. Inkorporierbarkeit der Zuschlagstoffe in Kunststoffe gewährleistet sein, wobei insbesondere eine gute Kompatibilität mit den Grundstoffen, insbesondere Kunststoffen, bei gleichzeitig möglichst geringem Einfluss auf die rheologischen Eigenschaften angestrebt wird.

Die Anmelderin hat nun in überraschender Weise gefunden, dass die zuvor geschilderte Problemstellung in effizienter Weise gelöst werden kann, indem als Zuschlagstoffe Partikel, insbesondere Pellets oder Granulate, aus vorzugsweise zerkleinerten Kohlenstofffasern bereitgestellt werden, welche unter Verwendung eines silanbasierten Bindemittels hergestellt sind. Die erfindungsgemäßen kohlenstofffaserhaltigen Partikel, insbesondere Pellets oder Granulate, weisen aufgrund ihrer Rieselfähigkeit und ihrer Staubfreiheit nicht nur eine gute Handhabbarkeit und Dosierbarkeit auf, sondern gewährleisten auch eine homogene Einarbeitung der Kohlenstofffasern in verschiedenartige Grundstoffe, insbesondere Kunststoffe. Weiterhin wird bei Einarbeitung der erfindungsgemäßen kohlenstofffaserhaltigen Partikel, insbesondere Pellets oder Granulaten, in die Grundstoffe, insbesondere Kunststoffe, überraschenderweise keine Verschlechterung der rheologischen Eigenschaften, insbesondere der Fließeigenschaften, beobachtet, so dass sich die resultierenden Verbundstoffe ohne Probleme weiterverarbeiten lassen, insbesondere mittels Spritzgießen oder dergleichen.

Zur Lösung des zuvor geschilderten Problems schlägt die vorliegende Erfindung somit kohlenstofffaserhaltige Partikel nach Anspruch 1 vor. Weitere, vorteilhafte Eigenschaften der erfindungsgemäßen kohlenstofffaserhaltigen Partikel sind Gegenstand der diesbezüglichen Unteransprüche.

Weiterer Gegenstand der vorliegenden Erfindung ist ein Verfahren zur Herstellung der erfindungsgemaßen kohlenstofffaserhaltigen Partikel, wie sie in den entsprechenden, auf das Verfahren zur Herstellung der kohlenstofffaserhaltigen Partikel selbst gerichteten Ansprüche beschrieben bzw. definiert sind.

Schließlich ist ein weiterer Gegenstand der vorliegenden Erfindung die Verwendung der erfindungsgemäßen kohlenstofffaserhaltigen Partikel, wie sie in den entsprechenden Verwendungsansprüchen beschrieben bzw. definiert sind.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Im Übrigen gilt, dass der Fachmann anwendungsbezogen oder einzelfallbedingt von den nachfolgend aufgeführten Zahlen-, Wert- bzw. Bereichsangaben abweichen kann, ohne dass er den Rahmen der vorliegenden Erfindung verlässt.

Gegenstand der vorliegenden Erfindung - gemäß einem **ersten** Aspekt der vorliegenden Erfindung - sind somit kohlenstofffaserhaltige Partikel, vorzugweise in Form von Granulaten oder Pellets, welche sich insbesondere für die Herstellung von kohlenstofffaserhaltigen Materialien, vorzugsweise kohlenstofffaserhaltigen Kunststoffen, eignen,
wobei die kohlenstofffaserhaltigen Partikel
- Kohlenstofffasern, insbesondere in zerkleinerter Form, und
- mindestens ein silanbasiertes Bindemittel
enthalten.

Der Begriff des Partikels - synonym auch als Teilchen bezeichnet - wie er im Rahmen der vorliegenden Erfindung verwendet wird, bezeichnet insbesondere diskrete bzw. abgrenzbare Objekte bzw. Formkörper, welche aus einer Vielzahl von miteinander verbundenen, vorzugsweise gleichartigen bzw. identischen Bestandteilen (hier konkret: insbesondere zerkleinerten Kohlenstofffasern) bestehen und insbesondere eine Ausdehnung im Bereich von Bruchteilen von Millimetern bis hin zu einigen Millimetern oder sogar Zentimetern in alle Richtungen des Raumes aufweisen können. Insbesondere bestehen die Partikel im Rahmen der vorliegenden Erfindung aus einer Vielzahl von vorzugsweise zerkleinerten Kohlenstofffasern, welche miteinander zu den jeweiligen Partikeln verbunden sind. Im Rahmen der vorliegenden Erfindung ist es jedoch nicht ausgeschlossen, dass die diskreten Partikel jeweils auch untereinander bzw. miteinander (lose) verbunden, insbesondere agglomeriert, sind.

Weiterhin bezeichnet der Begriff des Granulats, wie er im Rahmen der vorliegenden Erfindung verwendet wird, insbesondere zuvor beschriebene Partikel undefinierter Form bzw. Geometrie, welche aus festen Bestandteilen (vorliegend aus vorzugsweise zerkleinerten Kohlenstofffasern) bestehen, wobei jedes Partikel jeweils miteinander verbundene bzw. vernetzte Kohlenstofffasern enthält. Insbesondere weist jedes Granulatteilchen genügend Festigkeit auf, um unterschiedliche Handhabungen und Verwendungen zu gewährleisten. Granulate werden durch an sich bekannte Verfahren der sogenannten Granulation hergestellt, wobei verschiedene Verfahren, wie insbesondere Wirbelschichtgranulation, Trommelgranulation oder dergleichen, zum Einsatz kommen können.

Der Begriff des Pellets, wie er im Rahmen der vorliegenden Erfindung verwendet wird, bezeichnet insbesondere Partikel aus verdichteten, miteinander verbundenen Bestandteilen (vorliegend aus vorzugsweise zerkleinerten Kohlenstofffasern) mit definierter Form bzw. Geometrie, insbesondere in Korn-, Kugel- oder Zylinderform. Im Allgemeinen wird der Begriff im Plural gebraucht, da Pellets nicht einzeln, sondern in größeren Mengen verwendet werden. Pellets werden durch an sich bekannte, der Verfahrenstechnik der Agglomeration zugeordnete Verfahren hergestellt, welche auch als Pelletierung bzw. Pelletierverfahren bezeichnet werden.

Schließlich sind unter dem Begriff des silanbasierten Bindemittels, wie er im Rahmen der vorliegenden Erfindung verwendet wird, solche Verbindungen zu verstehen, welche mindestens ein Siliciumgrundgerüst mit vierbindigem Siliciumatom umfassen und bei welchen alle Wasserstoffatome des Silans durch organische Reste ersetzt sind. Somit kann das erfindungsgemäß eingesetzte silanbasierte Bindemittel synonym auch als siliciumorganische Verbindung oder aber auch als Silanderivat bezeichnet werden.

Eine Besonderheit der erfindungsgemäßen kohlenstofffaserhaltigen Partikel, insbesondere in Form von Pellets oder Granulaten, ist insbesondere darin zu sehen, dass sich im Rahmen der Erfindung unter Verwendung eines silanbasierten Bindemittels stabile Partikel mit vorzugsweise zerkleinerten Kohlenstofffasern herstellen lassen, welche sich überraschenderweise jedoch ohne Weiteres als Zuschlagstoffe bzw. Additive in Kunststoffe einarbeiten lassen (insbesondere mittels Compoundierung), wobei die erfindungsgemäßen Partikel insbesondere bei Einarbeitung in eine Kunststoffmatrix deren rheologischen Eigenschaften, insbesondere deren Fließfähigkeit, zumindest im Wesentlichen nicht beeinträchtigen, so dass das resultierende Material ohne verfahrenstechnische Probleme weiterverarbeitet werden kann (z B. mittels Spritzgießen oder dergleichen). Die erfindungsgemäßen Partikel ermöglichen somit in überraschender Weise gleichermaßen eine homogene Inkorporierung in eine Kunststoffmatrix, was - ohne sich auf eine bestimmte Theorie festlegen zu wollen - offenbar darauf zurückzuführen ist, dass das silanbasierte Bindemittel im Partikelzustand, insbesondere im Pellet- oder Granulatzustand, einen stabilen Verbund der einzelnen, vorzugsweise zerkleinerten Kohlenstofffasern gewährleistet, aber andererseits dieser Verbund in einer fließfähigen bzw. heißen Kunststoffmatrix ohne Weiteres wieder aufgelöst werden kann. Mit anderen Worten wird eine äußerst homogene Einarbeitung der kohlenstofffaserhaltigen Partikel dadurch erreicht, dass das silanbasierte Bindemittel einerseits eine gute Separierung bzw. Freisetzung der Kohlenstofffasern aus den Partikeln, insbesondere den Pellets oder Granulaten, erlaubt und andererseits eine effiziente Wechselwirkung sowohl mit den Kohlenstofffasern als auch mit der Kunststoffmatrix erreicht wird, so dass eine stabile wie homogene Inkorporierung der Kohlenstofffasern in die Kunststoffmatrix gewährleistet ist. Dies unterscheidet das erfindungsgemäß eingesetzte silanbasierte Bindemittel von möglichen anderen Bindemitteln, insbesondere solchen auf Basis von polymeren organischen Harzen (z. B. Polyurethan-, Epoxid-, Polyacrylatharzen etc.), da letztgenannte Bindemittel - wie die Untersuchungen der Anmelderin überraschend gezeigt haben - keine zufriedenstellend homogene Inkorporierung in eine Kunststoffmatrix ermöglichen und zudem zu einer signifikanten Beeinträchtigung der rheologischen Eigenschaften, insbesondere der Fließfähigkeit, der Kunststoffmatrix bei ihrer Einarbeitung führen.

Gemäß der vorliegenden Erfindung können die kohlenstofffaserhaltigen Partikel zumindest im Wesentlichen staubfrei, bevorzugt (vollkommen) staubfrei, ausgebildet sein. Somit weisen die erfindungsgemäßen kohlenstofffaserhaltigen Partikel gegenüber Kohlenstofffasern in bindemittelfreier Form eine signifikant verbesserte Handhabung bei Herstellung und Verwendung auf. Insbesondere wird auch eine Gesundheitsgefährdung aufgrund von Staubentwicklung bei Herstellung und Verarbeitung in effizienter Weise vermieden. Weiterhin wird auch das Risiko von Staubexplosionen bei Verwendung der erfindungsgemäßen kohlenstofffaserhaltigen Partikel vermieden; somit sind aufwendige Filteranlagen, wie sie bei Verwendung von pulverförmigen, zu Staubbildung neigenden Zuschlagstoffen unerlässlich sind, bei Verwendung der erfindungsgemäßen Partikel nicht erforderlich. Zudem wird durch die staubfreie Ausbildung eine verbesserte Dosierbarkeit sowie Einarbeitungseffizienz bei Verwendung der erfindungsgemäßen kohlenstofffaserhaltigen Partikel erreicht, da keinerlei Rückstände an Verpackungen oder Maschinenteilen zurückbleiben und ein Entweichen der Zuschlagstoffe in Form von Staub während der Zudosierung im Rahmen der Compoundierung vermieden wird.

Erfindungsgemäß kann es vorgesehen sein, dass die Kohlenstofffasern innerhalb der Partikel eine isotrope und/oder multidirektionale und/oder zufallsorientierte Ausrichtung aufweisen. Der Begriff "isotrop", wie er im Rahmen der vorliegenden Erfindung verwendet wird, bezeichnet die Unabhängigkeit einer Eigenschaft (vorliegend der Festigkeit bzw. Steifigkeit der Kohlenstofffasern) von einer bestimmten Richtung. Der Begriff "multidirektional" bezeichnet die Ausrichtung in alle Raumrichtungen, während der Begriff "zufallsorientiert" die stochastische bzw. statistische, d. h. von außen nicht vorgegebene Ausrichtung bezeichnet. Somit weisen die Kohlenstofffasern innerhalb eines einzelnen Partikels eine Vielzahl von verschiedenen (räumlichen) Ausrichtungen auf und sind nicht alle in einer einzigen Ausrichtung angeordnet. Durch die isotrope Ausrichtung der Kohlenstofffasern innerhalb der einzelnen Partikel ist auch eine nachfolgende isotrope und/oder multidirektionale Verteilung der Kohlenstoflfasern innerhalb des Verbundstoffs, insbesondere des Kunststoffs, möglich, in welchem die Kohlenstofffasern letztendlich eingearbeitet werden sollen. Folglich können bei Verwendung der erfindungsgemäßen kohlenstofffaserhaltigen Partikel, insbesondere Pellets oder Granulate, Verbundstoffe erhalten werden, welche eine Verbesserung der mechanischen Eigenschaften, insbesondere der Steifigkeit und der Zugfestigkeit, in alle Richtungen aufweisen. Es kann jedoch auch vorgesehen sein, dass die Kohlenstofffasern vor oder während der Einarbeitung in die Kunststoffmatrix monodirektional ausgerichtet werden, obwohl eine solche Ausführungsform erfindungsgemäß weniger bevorzugt ist.

Bevorzugt kann es erfindungsgemäß vorgesehen sein, dass die Kohlenstofffasern als rezyklierte Kohlenstofffasern vorliegen. In diesem Zusammenhang kann es insbesondere vorgesehen sein, dass die rezyklierten Kohlenstofffasern aus kohlenstofffaserverstärkten Kunststoffabfällen (CFK-Abfälle) gewonnen werden, insbesondere pyrolytisch und/oder mittels pyrolytischer Zersetzung der Kunststoffmatrix der CFK-Abfälle in einem Pyrolyseofen. Die pyrolytische Zersetzung der Kunststoffmatrix ist dabei im Wesentlichen vollständig, d. h. es werden nach der Rezyklierung ausschließlich Kohlenstofffasern ohne Kunststoffmatrix erhalten. Ein geeignetes Verfahren zur Herstellung rezyklierter Kohlenstofffasern wird beispielsweise in den zu derselben Patentfamilie gehörenden Druckschriften WO 2009/090264 A1, EP 2 152 487 B1 sowie US 2010/189629 A1 beschrieben, deren gesamter jeweiliger Offenbarungsgehalt bzw. Inhalt hiermit durch Bezugnahme eingeschlossen ist.

Die zur Herstellung der rezyklierten Kohlenstofffasern eingesetzten kohlenstofffaserverstärkten Kunststoffabfälle (CFK-Abfälle) fallen insbesondere bei der Herstellung von Flugzeugteilen und Teilen für Windkrafträder (z. B. in Form von Schnittresten) an. Im Rahmen der vorliegenden Erfindung können jedoch auch kohlenstofffaserverstärkte Kunststoffteile (CFK-Teile) verwendet werden, welche aufgrund von Brüchen oder Rissen innerhalb des Materials entsorgt werden müssen. Auch können als Ausgangsmaterialien für die Herstellung der rezyklierten Kohlenstofffasern CFK-haltige Materialien bzw. CFK-haltige Kunststoffabfälle auf Basis von zu entsorgenden Modellformen, Produktionsabfall, Prototypen, Fehlchargen und sogenannten "End-of-life"-Komponenten verwendet werden.

Die erfindungsgemäßen Partikel aus rezyklierten Kohlenstofffasern haben gegenüber Partikeln aus Kohlenstoffprimärfasern (synonym auch als Kohlenstoffrohfasern oder virgin fibres bezeichnet) den Vorteil, dass die rezyklierten Kohlenstofffasern eine bessere Benetzbarkeit und somit eine bessere Einarbeitbarkeit in die Kohlenstoffmatrix aufweisen. Ohne sich auf eine bestimmte Theorie beschränken zu wollen, resultiert die bessere Benetzbarkeit aus den durch das Pyrolyseverfahren bedingten hydrophilen Oberflächeneigenschaften sowie der rauheren Oberfläche der rezyklierten Kohlenstofffasern. Weiterhin ist die Herstellung von rezyklierten Kohlenstofffasern aufgrund des wesentlich geringeren Energieaufwands im Gegensatz zur Herstellung von Primär- bzw. Rohfasern deutlich kostengünstiger durchzuführen, so dass die erfindungsgemäßen kohlenstofffaserhaltigen Partikel wesentlich kostengünstiger und somit kostenökonomischer erhältlich sind als kohlenstofffaserhaltige Partikel aus Primär- bzw. Rohfasern. Darüber hinaus hat die Verwendung von aus kohlenstofffaserverstärkten Kunststoffabfällen (CFK-Abfällen) rezyklierten Kohlenstofffasern den Vorteil, dass diese Abfälle nicht kostenaufwendig entsorgt oder auf Deponien gelagert werden müssen.

Es ist jedoch im Rahmen der vorliegenden Erfindung auch möglich, kohlenstofffaserhaltige Partikel auf Basis von Primär- bzw. Rohfasern zu verwenden. Wie jedoch durch die Anmelderin im Rahmen von Versuchen überraschend festgestellt, liefern die rezyklierten Fasern aufgrund ihrer besseren Benetzbarkeit gegenüber Primärfasern bessere Ergebnisse in Bezug auf die Einarbeitbarkeit und die Beeinflussung der rheologischen Eigenschaften, insbesondere der Fließeigenschaften, der Kunststoffmatrix.

Im Rahmen der vorliegenden Erfindung kann es insbesondere vorgesehen sein, dass die kohlenstofffaserhaltigen Partikel in rieselfähiger Form bzw. in Form eines rieselfähigen Materials vorliegen. Die Rieselfähigkeit der erfindungsgemäßen kohlenstofffaserhaltigen Partikel gewährleistet eine gute Dosierbarkeit und Einarbeitbarkeit, insbesondere durch eine Vermeidung der Anhaftung der Partikel an Gefäßwänden oder Maschinenteilen. Somit wird sichergestellt, dass die erfindungsgemäßen kohlenstofffaserhaltigen Partikel auch in industriell und kontinuierlich betriebenen Compoundiervorrichtungen verwendet werden können und sich gleichbleibend und homogen in die Kunststoffmatrix einarbeiten lassen, so dass Verbundstoffe auf Basis von Kunststoffen mit gleichbleibender Qualität erhalten werden.

Im Allgemeinen kann die Schüttdichte der erfindungsgemäßen Partikel, insbesondere in Granulat- oder Pelletform, in weiten Bereichen variieren. Insbesondere weisen die kohlenstofffaserhaltigen Partikel eine Schüttdichte im Bereich von 150 bis 750 g/l, insbesondere im Bereich von 175 bis 700 g/l, vorzugsweise im Bereich von 180 bis 600 g/l, auf. Dennoch kann es anwendungsbezogen oder einzelfallbedingt erforderlich sein, von den vorgenannten Werten abzuweichen, ohne dass der Rahmen der vorliegenden Erfindung verlassen ist.

Was die Bestimmung der Schüttdichte anbelangt, so kann diese insbesondere nach ASTM B527-93/00 oder alternativ nach ISO 697/EN ISO 60 bzw. DIN 53468 bestimmt werden.

Aufgrund der relativ hohen Schüttdichte der erfindungsgemäßen kohlenstofffaserhaltigen Partikel wird insbesondere der Lager- und Transportaufwand signifikant verringert, da die erfindungsgemäßen Partikel, insbesondere Pellets oder Granulate, in wesentlich größeren Mengen transportiert und gelagert werden können.

Gemäß einer bevorzugten Ausführungsform ist es im Rahmen der vorliegenden Erfindung vorgesehen, dass die Kohlenstofffasern in zerkleinerter Form, insbesondere in gehackter und/oder gemahlener Form, vorliegen. Das Hacken der Kohlenstofffasern kann in einer hierfür üblichen, dem Fachmann an sich bekannten, Schneidevorrichtung erfolgen, wobei das Hacken grundsätzlich mittels Nass- oder Trockenverfahren durchgeführt werden kann. Durch mehrfache Zerkleinerung, insbesondere mehrfaches Hacken, können die Faserlängen der Kohlenstofffasern auf die entsprechende Länge eingestellt werden. In diesem Zusammenhang kann es vorgesehen sein, dass zur Herstellung der gemahlenen Kohlenstofffasern zuvor gehackte Kohlenstofffasern verwendet werden; die gemahlenen Kohlenstofffasern können durch ein Vermahlen der gehackten Kohlenstofffasern, insbesondere unter Verwendung einer Hammermühle, Pralltellermühle, Siebkorbmühle oder dergleichen, erhalten werden.

In erfindungsgemäß bevorzugter Weise können die Kohlenstofffasern in den erfindungsgemäßen kohlenstofffaserhaltigen Partikeln eine mittlere Faserlänge im Bereich von 0,1 bis 5.000 µm, insbesondere 1 bis 4.500 µm, vorzugsweise 10 bis 4.000 µm, bevorzugt 50 bis 3.500 µm, besonders bevorzugt 75 bis 3.250 µm, aufweisen. Die Faserlänge der Kohlenstofffasern in gehackter Form ist hierbei üblicherweise größer als die Faserlänge der Kohlenstofffasern in gemahlener Form. Dies ist für den Fachmann jedoch selbstverständlich.

Was die Bestimmung der Faserlänge und des Faserdurchmessers im Allgemeinen anbelangt, so kann diese anhand von dem Fachmann an sich wohlbekannten Verfahren vorgenommen werden. Insbesondere können die Faserlänge und der Faserdurchmesser im Allgemeinen mit Bestimmungsverfahren auf Basis von Lichtbeugung, insbesondere Röntgenbeugung und/oder Laserdiffraktometrie, oder aber lichtmikroskopisch, elektronenmikroskopisch oder dergleichen bestimmt werden. Darüber hinaus kann die Bestimmung der Faserlängen und Faserdurchmesser im Millimeterbereich auch mittels Siebanalyse nach DIN 66165 erfolgen. Insbesondere beziehen sich die zuvor angeführten Größenangaben auf eine zumindest im Wesentlichen faserförmige Grundstruktur. Weiterhin wird auf die nachfolgenden Ausführungen zur Größenbestimmung verwiesen.

Darüber hinaus kann es erfindungsgemäß vorgesehen sein, dass die Kohlenstofffasern einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen. In diesem Zusammenhang kann es erfindungsgemäß vorgesehen sein, dass die gehackten und/oder gemahlenen Kohlenstofffasern einen ähnlichen bzw. vergleichbaren bzw. identischen Faserdurchmesser aufweisen. Der Faserdurchmesser kann insbesondere durch lichtmikroskopische und/oder elektronenmikroskopische Bestimmungsmethoden ermittelt werden.

Gemäß einer bevorzugten Ausführungsform können die kohlenstofffaserhaltigen Partikel das silanbasierte Bindemittel in einer Menge von 0,1 bis 40 Gew.-%, insbesondere 0,5 bis 30 Gew.-%, vorzugsweise 1 bis 20 Gew.-%, besonders bevorzugt 2 bis 15 Gew.-%, ganz besonders bevorzugt 3 bis 10 Gew.-%, bezogen auf die kohlenstofffaserhaltigen Partikel, aufweisen. Im Rahmen der vorliegenden Erfindung sollte also eine gewisse Mindestmenge an silanbasiertem Bindemittel verwendet werden, um die einzelnen Kohlenstofffasern zu stabilen Pellets oder Granulaten zu verbinden bzw. zu vernetzen; jedoch sollte die Bindemittelmenge nicht die vorgenannte Obergrenze überschreiten, um eine gute Einarbeitung insbesondere in Kunststoffe zu ermöglichen.

Zudem können die kohlenstofffaserhaltigen Partikel Kohlenstofffasern in einer Menge von 60 bis 99,9 Gew.-%, insbesondere 70 bis 99,5 Gew.%, vorzugsweise 80 bis 99 Gew.-%, besonders bevorzugt 85 bis 98 Gew.-%, ganz besonders bevorzugt 90 bis 97 Gew.-%, bezogen auf die kohlenstofffaserhaltigen Partikel, aufweisen. Wie oben bereits in Bezug auf das silanbasierte Bindemittel ausgeführt, sollte auch der Anteil an Kohlenstofffasern im Rahmen der vorliegenden Erfindung eine gewisse Höchstmenge nicht überschreiten, da andernfalls aufgrund des hohen Anteils an Kohlenstofffasern keine stabilen Partikel mehr erhalten werden können; andererseits ist eine gewisse Mindestmenge erforderlich, um bei Einarbeitung insbesondere in Kunststoffe einen ausreichenden Effekt zu erzielen.

Darüber hinaus kann es vorgesehen sein, dass die kohlenstofffaserhaltigen Partikel eine Vielzahl von Kohlenstofffasern, insbesondere mindestens 10 Kohlenstofffasern, vorzugsweise mindestens 25 Kohlenstofffasern, bevorzugt mindestens 50 Kohlenstofffasern, besonders bevorzugt mindestens 75 Kohlenstofffasern, ganz besonders bevorzugt mindestens 100 Kohlenstofffasern, pro Partikel aufweisen.

In diesem Zusammenhang kann es zudem vorgesehen sein, dass die kohlenstofffaserhaltigen Partikel eine Vielzahl von Kohlenstofffasern, insbesondere 10 bis 1.000.000 Kohlenstofffasern, vorzugsweise 25 bis 500.000 Kohlenstofffasern, bevorzugt 50 bis 100.000 Kohlenstofffasern, besonders bevorzugt 75 bis 50.000 Kohlenstofffasern, ganz besonders bevorzugt 100 bis 10.000 Kohlenstofffasern, pro Partikel aufweisen.

Was das silanbasierte Bindemittel anbelangt, so kann es im Rahmen der vorliegenden Erfindung vorgesehen sein, dass das silanbasierte Bindemittel die Kohlenstofffasern eines einzelnen Partikels zusammenhält und/oder miteinander verbindet, insbesondere miteinander vernetzt und/oder benetzt, vorzugsweise derart, dass Partikel resultieren und/oder die Kohlenstofffasern jeweils zu einzelnen Partikeln zusammengeführt und/oder verbunden sind. Durch den erfindungsgemäßen Einsatz des silanbasierten Bindemittels werden die Kohlenstofffasern untereinander verbunden bzw. miteinander vernetzt, so dass stabile Partikel, insbesondere Pellets oder Granulate, erhalten werden. Gleichzeitig ermöglicht das silanbasierte Bindemittel jedoch eine Auflösung der Pellet- oder Granulatform in die einzelnen Kohlenstofffasern bei Zugabe zu einer fließfähigen bzw. verflüssigten Kunststoffmasse, so dass eine homogene Einarbeitung gewährleistet ist. Ein trockenes Verpressen der Kohlenstofffasern ohne Bindemittel zu einzelnen Partikeln würde - abgesehen von einer unzureichenden Stabilität der resultierenden Partikel - zu einer signifikanten unerwünschten Verkürzung der Länge bzw. Zerkleinerung der Kohlenstofffasern und damit zu den oben im Zusammenhang mit der Verwendung von hohen Scherkräften geschilderten Problemen führen.

Weiterhin kann das silanbasierte Bindemittel insbesondere ausgewählt und/oder ausgebildet sein derart, dass es zur Ausbildung von physikalischen und/oder chemischen Bindungen, insbesondere chemischen Bindungen, mit einer Kunststoffmatrix imstande ist.

In diesem Zusammenhang kann es vorgesehen sein, dass das silanbasierte Bindemittel mindestens eine polare und/oder hydrophile Gruppe aufweist, welche insbesondere ausgewählt sein kann aus Aminogruppen, Alkoxygruppen, Aryloxygruppen, Aralkyloxygruppen, Hydroxylgruppen, Thiolgruppen, Halogenen, Carboxylsäuregruppen, Carbonsäureestergruppen und/oder Ammoniumgruppen, insbesondere Aminogruppen und/oder Hydroxylgruppen, vorzugsweise primären Aminogruppen, sekundären Aminogruppen, tertiären Aminogruppen und/oder Hydroxylgruppen. Die polaren und/oder hydrophilen Gruppen des silanbasierten Bindemittels gewährleisten eine Wechselwirkung mit den Kohlenstofffasern, so dass stabile Partikel, insbesondere Pellets oder Granulate, resultieren. Weiterhin wird durch die Wechselwirkung des silanbasierten Bindemittels mit der Kunststoffmatrix des Verbundstoffs eine homogene und stabile Einarbeitung der erfindungsgemäßen kohlenstofffaserhaltigen Partikel ermöglicht. Zudem erlaubt eine Anpassung der polaren und/oder hydrophilen Gruppe des silanbasierten Bindemittels an die jeweilige Kunststoffmatrix eine gezielte Einstellung der Eigenschaften der erfindungsgemäßen kohlenstofffaserhaltigen Partikel in Bezug auf die jeweils einzusetzende Kunststoffmatrix, so dass stets eine optimale und homogene Einarbeitbarkeit und Verteilung der Kohlenstofffasern innerhalb der Kunststoffmatrix gewährleistet ist. Somit können die kohlenstofffaserhaltigen Partikel universell und unabhängig von der jeweiligen Kunststoffmatrix verwendet werden.

Gemäß einer bevorzugten Ausführungsform kann es vorgesehen sein, dass das silanbasierte Bindemittel mindestens ein Alkoxysilan, insbesondere ein mindestens eine polare und/oder hydrophile Gruppe enthaltendes Alkoxysilan, oder dessen Oligomer ist oder enthält, wobei die polare und/oder hydrophile Gruppe insbesondere ausgewählt sein kann aus Aminogruppen, Alkoxygruppen, Aryloxygruppen, Aralkyloxygruppen, Hydroxylgruppen, Thiolgruppen, Halogenen, Carboxylsäuregruppen, Carbonsäureestergruppen und/oder Ammoniumgruppen, insbesondere Aminogruppen und/oder Hydroxylgruppen, vorzugsweise primären Aminogruppen, sekundären Aminogruppen, tertiären Aminogruppen und/oder Hydroxylgruppen.

Besonders gute Ergebnisse im Rahmen der vorliegenden Erfindung werden erhalten, wenn das silanbasierte Bindemittel mindestens ein Alkoxysilan, insbesondere ein mindestens eine Aminogruppe enthaltendes Alkoxysilan, vorzugsweise ein Aminoalkylalkoxysilan, oder dessen Oligomer ist oder enthält.

Zudem kann es auch vorgesehen sein, dass das silanbasierte Bindemittel mindestens eine sich von 1,2-Ethylendiamin ableitende Einheit enthält.

Weiterhin kann es vorgesehen sein, dass das silanbasierte Bindemittel mindestens eine Alkoxygruppe, insbesondere eine Methoxy-, Ethoxy- oder Propoxygruppe, bevorzugt am Silanatom, enthält.

Bevorzugt kommen erfindungsgemäß niedermolekulare oder allenfalls oligomere Silane als Bindemittel zum Einsatz. Insbesondere kann das silanbasierte Bindemittel ein Molekulargewicht im Bereich von 100 bis 10.000 g/mol, insbesondere 150 bis 7.500 g/mol, vorzugsweise 175 bis 5.000 g/mol, besonders bevorzugt 200 bis 2.500 g/mol, aufweisen. Es hat sich gezeigt, dass besonders gute Ergebnisse im Rahmen der vorliegenden Erfindung erhalten werden, wenn das Molekulargewicht des silanbasierten Bindemittels in dem vorgenannten Bereich liegt.

In Bezug auf die Bestimmung des Molekulargewichts kann auf dem Fachmann im Allgemeinen bekannte Methoden wie die Gelpermeationschromatographie (GPC), insbesondere die Gelpermeationschromatographie gemäß DIN 55672 unter Verwendung von Polystyrol und/oder Polymethacrylat als internem Standard, verwiesen werden.

Darüber hinaus kann es im Rahmen der vorliegenden Erfindung vorgesehen sein, dass das silanbasierte Bindemittel außerdem mindestens einen weiteren Hilfsstoff enthält; der Hilfsstoff kann insbesondere ausgewählt sein aus der Gruppe von Lösemitteln, Rheologiemodifizierungsmitteln, Entschäumern, pH-Regulatoren, Emulgatoren, Netzmitteln, Füllstoffen und Stabilisatoren. Die vorgenannten Stoffe dienen insbesondere dazu, die Eigenschaften des silanbasierten Bindemittels gezielt an die jeweils zu verwendende Kunststoffmatrix des Verbundstoffs sowie an verschiedene Verwendungen des Verbundstoffs anzupassen.

Besonders gute Ergebnisse im Rahmen der vorliegenden Erfindung werden erhalten, wenn das silanbasierte Bindemittel mindestens eine Verbindung der allgemeinen Formel (I)

(R¹)(R²)N-[CH₂]ₙ-N(R³)(R⁴) (I)

oder deren Oligomer enthält oder darstellt,
wobei in der allgemeinen Formel (I) die Variable n für eine ganze Zahl von 1 bis 10, vorzugsweise 2, steht und die Reste R¹, R², R³ und R⁴, jeweils unabhängig voneinander, Wasserstoff oder einen organischen Rest R bezeichnen, jedoch mit der Maßgabe, dass R¹, R², R³ und R⁴ nicht alle gleichzeitig Wasserstoff darstellen und/oder dass mindestens
ein Rest R¹, R², R³ und R⁴ von Wasserstoff verschieden ist,
wobei der organische Rest R der allgemeinen Formel

-X-Si(OR')(OR")(OR"')

entspricht, wobei der Rest X einen divalenten organischen Rest, insbesondere eine Alkylengruppe, vorzugsweise eine Methylen-, Ethylen-, Propylen- oder Butylengruppe, darstellt und die Reste R', R" und R"', jeweils unabhängig voneinander, einen Alkylrest, insbesondere einen Methyl-, Ethyl- oder Propylrest, vorzugsweise einen Methyl- oder Ethylrest, darstellen.

Die Verwendung des silanbasierten Bindemittels der vorgenannte allgemeinen Formel (I) gewährleistet zum einen eine gute Verbindung bzw. Vernetzung der einzelnen Kohlenstofffasern zu Partikeln vor der Einarbeitung in Kunststoffe (d. h. im Zustand der Granulate oder Pellets) und zum anderen eine gute Einarbeitbarkeit, so dass eine homogene Verteilung der Kohlenstofffasern innerhalb der Kunststoffmatrix des Verbundstoffs resultiert.

Im Zusammenhang mit der Erfindung ist es bevorzugt, wenn die kohlenstofffaserhaltigen Partikel als Pellets oder als Granulate vorliegen. Die Verwendung von Pellets oder Granulaten führt zu einer signifikanten Erhöhung der Schüttdichte gegenüber dem Ausgangsmaterial in Form von Kohlenstofffasern, so dass der Lager- und Transportaufwand deutlich sinkt. Weiterhin wird - wie oben bereits ausgeführt - die Staubentwicklung bei der Lagerung, dem Transport sowie der Verarbeitung vermieden. Folglich kann der Einsatz von aufwendigen und kostenintensiven Filtersystemen bei der Herstellung und Verarbeitung der erfindungsgemäßen Partikel, insbesondere Pellets oder Granulate, entfallen. Weiterhin können die erfindungsgemäßen Partikel infolge der Pellet- oder Granulatform und somit infolge der standardisierierten Materialgröße in Vorrichtungen bzw. Fördersystemen, wie z. B. Förderschnecken etc., wie sie üblicherweise im Rahmen des Compoundierverfahrens zum Einsatz kommen, eingesetzt werden.

Gemäß einer ersten besonderen Ausführungsform der vorliegenden Erfindung kann es somit vorgesehen sein, dass die kohlenstofffaserhaltigen Partikel in Form von Granulaten vorliegen.

Besonders gute Ergebnisse werden erhalten, wenn die kohlenstofffaserhaltigen Partikel in Form von Granulaten einen Durchmesser im Bereich von 0,1 bis 40 mm, insbesondere 0,2 bis 30 mm, vorzugsweise 0,4 bis 20 mm, bevorzugt 0,5 bis 10 mm, ganz besonders bevorzugt 0,75 bis 6 mm, aufweisen. Die Bestimmung des Durchmessers kann insbesondere unter Verwendung der Siebanalyse, vorzugsweise nach DIN 66165, bestimmt werden.

Zudem kann es vorgesehen sein, dass die kohlenstofffaserhaltigen Partikel in Form von Granulaten eine Schüttdichte im Bereich von 1 bis 800 g/l, insbesondere 10 bis 700 g/l, vorzugsweise 40 bis 600 g/l, bevorzugt 70 bis 500 g/l, besonders bevorzugt 100 bis 400 g/l, ganz besonders bevorzugt 175 bis 300 g/l, aufweisen. Im Allgemeinen erfolgt die Bestimmung der Schüttdichte, wie oben bereits ausgeführt.

Weiterhin kann es im Rahmen der vorliegenden Erfindung vorgesehen sein, dass die kohlenstofffaserhaltigen Partikel in Form von Granulaten die Kohlenstofffasern in gemahlener Form enthalten. Die gemahlenen Kohlenstofffasern können im Rahmen der vorliegenden Erfindung aus zuvor gehackten Kohlenstofffasern erhalten werden, wobei die zuvor gehackten Kohlenstofffasern dann durch Mahlen, insbesondere unter Verwendung von Mühlen, wie Hammermühlen, Pralltellermühlen, Siebkorbmühlen oder dergleichen, weiter zerkleinert werden können.

Zudem weisen die Kohlenstofffasern der kohlenstofffaserhaltigen Partikel in Form von Granulaten eine mittlere Faserlänge im Bereich von 0,1 bis 1.000 µm, insbesondere 1 bis 800 µm, vorzugsweise 5 bis 500 µm, bevorzugt 10 bis 400 µm, besonders bevorzugt 25 bis 300 ganz besonders bevorzugt 50 bis 250 µm, noch mehr bevorzugt 75 bis 150 auf. Zur Bestimmung der Faserlänge kann auf vorherige Ausführungen verwiesen werden.

Weiterhin kann es vorgesehen sein, dass die Kohlenstofffasern der kohlenstofffaserhaltigen Partikel in Form von Granulaten einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen. Bezüglich der Bestimmung des Faserdurchmessers kann auf vorstehende Ausführungen verwiesen werden.

Gemäß einer weiteren, alternativen Ausführungsform kann es vorgesehen sein, dass die kohlenstofffaserhaltigen Partikel in Form von Pellets, vorzugsweise mit zumindest im Wesentlichen zylindrischer Form, vorliegen. Wie vorstehend bereits ausgeführt, können durch die Pelletierung und der damit einhergehenden Erhöhung der Schüttdichte und der Vermeidung einer Staubentwicklung sowohl der Lager- und Transportaufwand verringert als auch die Handhabbarkeit und Dosierbarkeit verbessert werden.

In diesem Zusammenhang kann es vorgesehen sein, dass die kohlenstofffaserhaltigen Partikel in Form von Pellets einen Durchmesser im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen. Die Bestimmung des Durchmessers der erfindungsgemäßen kohlenstofffaserhaltigen Partikel in Form von Pellets kann insbesondere mittels Siebanalyse gemäß DIN 66165 durchgeführt werden.

Zudem kann es vorgesehen sein, dass die kohlenstofffaserhaltigen Partikel in Form von Pellets eine Länge im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen. Die Bestimmung der Länge der Pellets ist ebenfalls mittels der zuvor beschriebenen Siebanalyse möglich.

Darüber hinaus kann es vorgesehen sein, dass die kohlenstofffaserhaltigen Partikel in Form von Pellets eine Schüttdichte im Bereich von 1 bis 1.000 g/l, insbesondere 10 bis 800 g/l, vorzugsweise 100 bis 700 g/l, bevorzugt 200 bis 600 g/l, besonders bevorzugt 300 bis 500 g/l, ganz besonders bevorzugt 350 bis 475 g/l, aufweisen. Für die Bestimmung der Schüttdichte kann auf vorherige Ausführungen verwiesen werden.

Besonders gute Ergebnisse im Rahmen der vorliegenden Erfindung werden erhalten, wenn die kohlenstofffaserhaltigen Partikel in Form von Pellets die Kohlenstofffasern in gehackter Form enthalten. Das Hacken der Kohlenstofffasern kann mittels einer hierfür üblichen, dem Fachmann an sich bekannten Schneidemaschine, insbesondere mittels Nass- oder Trockenverfahren, erfolgen. Durch mehrfaches Hacken können die gewünschten Faserlängen eingestellt werden.

Weiterhin kann es vorgesehen sein, dass die kohlenstofffaserhaltigen Partikel in Form von Pellets die Kohlenstofffasern in einer mittleren Faserlänge im Bereich von 0,01 bis 100 mm, insbesondere 0,1 bis 50 mm, vorzugsweise 0,2 bis 25 mm, bevorzugt 0,5 bis 15 mm, besonders bevorzugt 1 bis 10 mm, ganz besonders bevorzugt 2 bis 5 mm, aufweisen. Die Bestimmung der mittleren Faserlänge kann mittels der zuvor beschriebenen Methode erfolgen.

Zudem kann es vorgesehen sein, dass die Kohlenstofffasern der kohlenstofffaserhaltigen Partikel in Form von Pellets einen mittleren Faserdurchmesser im Bereich von 0,1 bis 50 mm, vorzugsweise 0,2 bis 25 mm, bevorzugt 0,5 bis 15 mm, besonders bevorzugt 1 bis 10 mm, ganz besonders bevorzugt 2 bis 5 mm, aufweisen. Die Bestimmung des Faserdurchmessers kann durch Bestimmungsmethoden erfolgen, wie sie vorstehend ausgeführt wurden.

Ein weiterer Gegenstand der vorliegenden Erfindung - gemäß einem **zweiten** Aspekt der vorliegenden Erfindung - ist ein Verfahren zur Herstellung der erfindungsgemäßen kohlenstofffaserhaltigen Partikel, wobei Kohlenstofffasern, insbesondere in zerkleinerter Form, zunächst mit mindestens einem silanbasierten Bindemittel in Kontakt gebracht werden und nachfolgend die mit dem silanbasierten Bindemittel in Kontakt gebrachten Kohlenstofffasern zu diskreten Partikeln geformt werden.

Im Zusammenhang mit dem erfindungsgemäßen Verfahren ist es gemäß einer bevorzugten Ausführungsform vorgesehen, dass die Kohlenstofffasern in gehackter und/oder gemahlener Form eingesetzt werden. Je nach gewünschter Form der Kohlenstofffasern erfolgt entweder eine Granulierung oder eine Pelletierung. Bei Einsatz von Kohlenstofffasern in gehackter Form wird bevorzugt eine Pelletierung durchgeführt, während die Kohlenstofffasern in gemahlener Form bevorzugt granuliert werden.

Zudem ist es im Rahmen des erfindungsgemäßen Verfahrens gemäß einer bevorzugten Ausführungsform vorgesehen, dass die Partikel in Form von Pellets oder Granulaten erhalten werden bzw. wobei die Formung der diskreten Partikel mittels Pelletierung oder Granulierung erfolgt. Wie bereits vorstehend ausgeführt, ergeben sich durch die Pelletierung oder Granulierung Vorteile hinsichtlich der Lagerung, der Handhabbarkeit sowie der Dosierbarkeit. Das erfindungsgemäße Verfahren kann in handelsüblichen Pelletiermaschinen und handelsüblichen Granuliertrommeln durchgeführt werden.

Besonders gute Ergebnisse im Rahmen des erfindungsgemäßen Verfahrens werden erhalten, wenn das silanbasierte Bindemittel in einer Menge von 0,1 bis 40 Gew.-%, insbesondere 0,5 bis 30 Gew.%, vorzugsweise 1 bis 20 Gew.-%, besonders bevorzugt 2 bis 15 Gew.%, ganz besonders bevorzugt 3 bis 10 Gew.-%, bezogen auf die resultierenden kohlenstofffaserhaltigen Partikel, eingesetzt wird.

Zudem kann es im Rahmen des erfindungsgemäßen Verfahrens vorgesehen sein, dass die diskreten Partikel abschließend getrocknet und/oder gehärtet werden. Die Trocknung und/oder Härtung gewährleistet die Entfernung von etwaigen Lösungsmitteln, welche in dem silanbasierten Bindemittel enthalten sein können, und verhindert auf diese Weise eine etwaige Verunreinigung der Kunststoffmatrix sowie ein Verkleben der Partikel nach der Herstellung.

Für weitergehende Ausführungen zu diesem erfindungsgemäßen Aspekt kann auf die voranstehenden Ausführungen zu den erfindungsgemäßen kohlenstofffaserhaltigen Partikeln verwiesen werden, welche in Bezug auf diesen erfindungsgemäßen Aspekt entsprechend gelten.

Schließlich ist ein weiterer Gegenstand der vorliegenden Erfindung - gemäß einem **dritten** Aspekt der vorliegenden Erfindung - die Verwendung der erfindungsgemäßen kohlenstofffaserhaltigen Partikel insbesondere für Kunststoffe, Baustoffe oder zementäre Systeme.

Insbesondere kann es im Rahmen der vorliegenden Erfindung vorgesehen sein, dass die kohlenstofffaserhaltigen Partikel zur Herstellung von kohlenstofffaserhaltigen Kunststoffen verwendet werden. Im Rahmen der vorliegenden Erfindung können bevorzugt thermoplastische Kunststoffe, thermoplastische Kunststoffmischungen sowie duroplastische Kunststoffe eingesetzt werden. Insbesondere kann der Kunststoff ausgewählt sein aus der Gruppe von Polycarbonatharzen, Polyamidharzen, gesättigten Polyesterharzen, Polyurethanharzen, Polyacetalharzen, Polysulfonharzen, Polyethersulfonharzen (PES), Polyphenylensulfidharzen (PPS), Polystyrolharzen (PS), Polyolefinharzen, Polyvinylchloridharzen, Polyetheretherketonharzen (PEEK), Polyetherimidharzen (PEI), Polyarylenoxidharzen, Polyamidimidharzen, Polyacrylatharzen, Polyimidharzen sowie deren Mischungen und Kombinationen.

In diesem Zusammenhang kann es insbesondere vorgesehen sein, dass die erfindungsgemäßen kohlenstofffaserhaltigen Partikel zur Compoundierung, insbesondere zur Inkorporierung in Kunststoffe, vorgesehen sind. Insbesondere kann durch die Inkorporierung der erfindungsgemäßen kohlenstofffaserhaltigen Partikel eine Veredelung der Kunststoffe und/oder insbesondere eine Verbesserung der mechanischen Eigenschaften erreicht werden.

Für weitergehende Ausführungen zu diesem erfindungsgemäßen Aspekt kann auf die voranstehenden Ausführungen zu den beiden übrigen Erfindungsaspekten verwiesen werden, welche in Bezug auf diesen erfindungsgemäßen Aspekt entsprechend gelten.

Die erfindungsgemäßen kohlenstofffaserhaltigen Partikel, das erfindungsgemäße Verfahren zu ihrer Herstellung sowie deren erfindungsgemäße Verwendung besitzen eine Reihe von Vorteilen, welche die erfindungsgemäßen kohlenstofffaserhaltigen Partikel, das Verfahren zu ihrer Erstellung sowie ihre Verwendung gegenüber dem Stand der Technik auszeichnen:

Die erfindungsgemäßen kohlenstofffaserhaltigen Partikel weisen eine exzellente Handhabbarkeit auf, da sie zumindest im Wesentlichen staubfrei sind und somit keine aufwendigen und kostenintensiven Schutzvorkehrungen in Form von Filtersystemen bei der Herstellung und Verwendung der erfindungsgemäßen Partikel, insbesondere Pellets oder Granulate, getroffen werden müssen.

Weiterhin weisen die erfindungsgemäßen kohlenstofffaserhaltigen Partikel, insbesondere Pellets oder Granulate, eine hohe Fließfähigkeit und Rieselfähigkeit und somit eine gute Dosierbarkeit auf, weshalb sie folglich in automatisierten Zuführ- und Mischvorrichtungen des Standes der Technik ihm Rahmen des Compoundierverfahrens ohne Probleme eingesetzt werden können.

Weiterhin können die erfindungsgemäßen kohlenstofffaserhaltigen Partikel, insbesondere Pellets oder Granulate, gut in die Kunststoffmatrix eingearbeitet werden, so dass eine homogene Verteilung und damit eine gleichbleibende Qualität des Verbundstoffs gewährleistet ist. Somit wird eine Verschlechterung der Qualität in Folge einer inhomogenen Verteilung der Kohlenstofffasern in der Kunststoffmatrix effektiv vermieden.

Darüber hinaus ist es aufgrund der multidirektionalen bzw. isotropen bzw. zufallsorientierten Ausrichtung der Kohlenstofffasern innerhalb der erfindungsgemäßen kohlenstofffaserhaltigen Partikel, insbesondere Pellets oder Granulate, möglich, Verbundstoffe mit multidirektional ausgerichteten Kohlenstofffasern mittels Compoundierung herzustellen. Somit können gleichbleibende mechanische Eigenschaften, insbesondere in Bezug auf Festigkeit und Steifigkeit, in alle Richtungen des resultierenden Verbundstoffs erhalten werden.

Weiterhin kann durch die multidirektionale Ausrichtung der Kohlenstofffasern innerhalb des Verbundstoffs eine gesteigerte Schlagfestigkeit erreicht werden, da - ohne sich auf eine bestimmte Theorie zu beschränken - eine skelettartige Struktur der Gesamtheit der Kohlenstofffasern, welche durch die multidirektionale Ausrichtung entsteht, die Schlagenergie aufzunehmen und über den resultierenden Verbundstoff zu verteilen imstande ist.

Durch die Verwendung eines silanbasierten Bindemittels zur Herstellung der erfindungsgemäßen kohlenstoffhaltigen Partikel, insbesondere Pellets und Granulate, werden stabile Partikel durch die Vernetzung bzw. Verbindung der Kohlenstofffasern untereinander erhalten. Jedoch kann diese Vernetzung bzw. Verbindung der Kohlenstofffasern bei Einarbeitung der erfindungsgemäßen Partikel in verflüssigte bzw. fließfähige Kunststoffe leicht aufgebrochen werden, so dass eine homogene Einarbeitung der Kohlenstofffasern bei Verwendung der erfindungsgemäßen Partikel resultiert. Das silanbasierte Bindemittel ist zudem in Bezug auf Kunststoffe universell kompatibel und führt insbesondere zu keiner Störung der resultierenden Matrix.

Zudem können die erfindungsgemäßen kohlenstoffhaltigen Partikel äußerst kostengünstig hergestellt werden, da als Ausgangsprodukt rezyklierte Kohlenstofffasern verwendet werden Diese können aufgrund der wesentlich weniger energieintensiven Rezyklierung, welche weniger als ein Zehntel der Energie zur Herstellung von Kohlenstoffprimärfasern benötigt, sowie des zu geringen Kosten erhältlichen kohlenstofffaserverstärkten Kunststoffabfalls (CFK-Abfalls) signifikant kostengünstiger hergestellt werden als Kohlenstoffprimärfasern.

Weiterhin wird durch die Rezyklierung eine Umweltbelastung durch immer größere Mengen an kohlenstofffaserverstärkten Kunststoffabfällen (CFK-Abfällen), welche insbesondere in Form von Ausschussteilen und Schnittabfällen bei der Produktion von Teilen aus kohlenstofffaserverstärkten Kunststoffen (CFKs) sowie bei der Entsorgung von kohlenstofffaserverstärkten Kunststoffen (CFKs) anfallen, vermieden.

Des Weiteren wurde überraschend gefunden, dass erfindungsgemäße kohlenstoffhaltige Partikel auf Basis von rezyklierten Kohlenstofffasern, insbesondere mittels Pyrolyse rezyklierten Kohlenstofffasern (mit CFK-haltigen Kunststoffmaterialien als Ausgangsmaterialien), im Vergleich zu erfindungsgemäßen kohlenstoffhaltigen Partikel auf Basis von Kohlenstoffprimärfasern eine noch bessere Einarbeitbarkeit in Kunststoffe und eine noch bessere Benetzbarkeit aufweisen; diesbezüglich kann auf die obigen Ausführungen verwiesen werden.

Darüber hinaus erfolgt bei der Einarbeitung der erfindungsgemäßen kohlenstofffaserhaltigen Partikel zumindest im Wesentlichen keine Veränderung der Fließeigenschaften des entsprechenden Kunststoffs, wohingegen eine starke negative Beeinflussung der Fließeigenschaften im Stand der Technik erhalten wird. Somit erfolgt bei Einarbeitung der erfindungsgemäßen kohlenstofffaserhaltigen Partikel, insbesondere Pellets oder Granulate, zumindest im Wesentlichen keine negative Beeinflussung der Weiterverarbeitung der Verbundstoffe, insbesondere durch Spritzgießen oder dergleichen, wie es jedoch im Stand der Technik der Fall ist.

Schließlich ist auch eine Einarbeitung in hydraulische Bindemittel, wie Zement, Mischbinder, hydraulischer Kalk (Trass), Putz- und Mauerbinder auf Zement-/Acryl-Basis, Gips oder dergleichen, welche sowohl an Luft wie auch unter Wasser härten, möglich. Somit können die erfindungsgemäßen kohlenstofffaserhaltigen Partikel zur Verstärkung einer Vielzahl von Matrizes verwendet werden und weisen folglich eine universelle Anwendbarkeit auf.

Weitere Vorteile, Eigenschaften, Aspekte und Merkmale der vorliegenden Erfindung ergeben sich aus der folgenden Beschreibung von in der Zeichnung dargestellten, bevorzugten Ausführungsbeispielen. Die oben beschriebenen und/oder in den Ansprüchen und/oder in den nachfolgenden Figurenbeschreibung offenbarten Merkmale können bedarfsweise auch miteinander kombiniert werden, auch wenn dies nicht im Einzelnen ausdrücklich beschrieben ist.

Es zeigt:
- Fig. 1: schematisch einen Ablauf des erfindungsgemäßen Herstellungsverfahrens für die kohlenstofffaserhaltigen Partikel gemäß einer bevorzugten Ausführungsform des erfindungsgemäßen Verfahrens;
- Fig. 2A: eine schematische Darstellung von erfindungsgemäßen kohlenstofffaserhaltigen Partikeln in Form von Pellets gemäß einer bevorzugten Ausführungsform der Erfindung;
- Fig. 2B: eine schematische Darstellung von erfindungsgemäßen kohlenstofffaserhaltigen Partikeln in Form von Granulaten gemäß einer bevorzugten Ausführungsform der Erfindung.

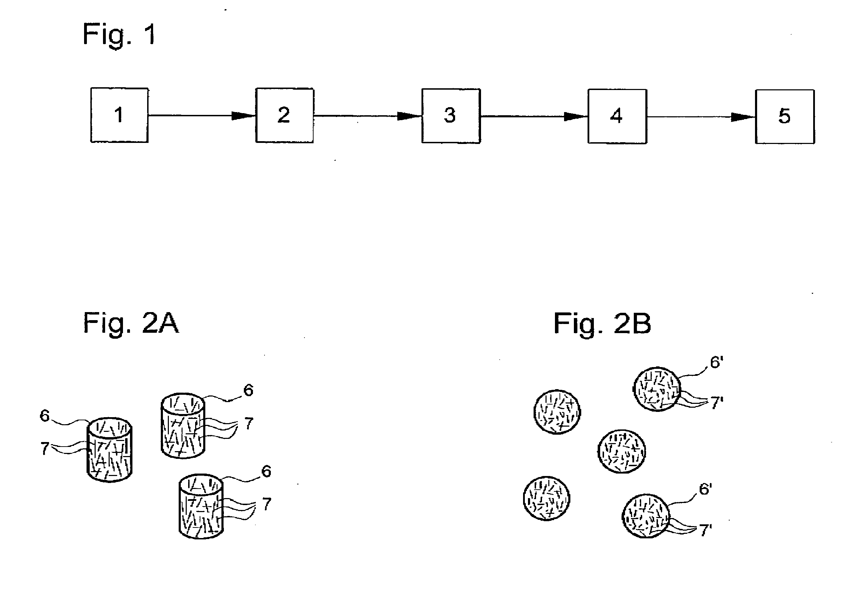

Fig. 1 zeigt schematisch - gemäß einer bevorzugten Ausführungsform der Erfindung - einen Ablauf des erfindungsgemäßen Verfahrens zur Herstellung von kohlenstofffaserhaltigen Partikeln gemäß der vorliegenden Erfindung. Bei Schritt 1 werden zunächst die erfindungsgemäß eingesetzten Kohlenstofffasern bereitgestellt, welche in einem nachfolgenden Schritt 2 einer Zerkleinerung, insbesondere mittels Hacken und/oder Vermahlen, unterzogen werden, bevor sie bei Schritt 3 mit mindestens einem silanbasierten Bindemittel, insbesondere wie zuvor definiert, in Kontakt gebracht werden. Nachfolgend erfolgt in Schritt 4 die Formgebung zu Pellets oder Granulaten, d. h. eine Pelletierung bzw. Granulierung. Schließlich kann sich ein Trocknungsschritt 5 anschließen.

Fig. 2A zeigt schematisch erfindungsgemäße kohlenstofffaserhaltige Partikel in Form zylindrischer Pellets 6, welche aus Kohlenstoffeinzelfasern 7 bestehen, die mittels eines silanbasierten Bindemittels verbunden sind.

Fig. 2B zeigt schematisch eine Ausführungsform, bei welcher die erfindungsgemäßen kohlenstofffaserhaltigen Partikel in Form von kornförmigen Granulaten 6' aus Kohlenstoffeinzeifasern 7' vorliegen.

Im Rahmen der vorliegenden Erfindung werden somit vorzugsweise zerkleinerte Kohlenstoffeinzeifasern zu kohlenstofffaserhaltigen Partikeln, insbesondere in Form von Pellets oder Granulaten, zusammengeführt, was im Rahmen der vorliegenden Erfindung unter Verwendung eines silanbasierten Bindemittels erfolgt; auf diese Weise lassen sich stabile Partikel auf Kohlenstofffaserbasis bereitstellen, welche sich ohne Weiteres als Zuschlagstoffe bzw. Additive in Kunststoffen unterschiedlichster Art einarbeiten lassen, insbesondere mittels Compoundierung. Die erfindungsgemäßen Partikel ermöglichen in vollkommen überraschender Weise eine homogene Inkorporierung in unterschiedlichste Kunststoffe. Insbesondere sind die erfindungsgemäßen kohlenstofffaserhaltigen Partikel mit dem Vorteil verbunden, dass sie die rheologischen Eigenschaften, insbesondere die Fließeigenschaften der Kunststoffe, in welche sie eingearbeitet werden, nicht bzw. zumindest im Wesentlichen nicht beeinträchtigen.

Durch die staubfreie und rieselfähige Ausbildung der erfindungsgemäßen kohlenstofffaserhaltigen Partikel wird eine signifikant verbesserte Handhabung bei Herstellung und Anwendung erreicht. Insbesondere werden bei der Anwendung die Dosierbarkeit als auch die Einarbeitungseffizienz in signifikanter Weise verbessert.

Im Rahmen der vorliegenden Erfindung ist es somit erstmals gelungen, die mit der Inkorporierung von Kohlenstofffasern im Stand der Technik einhergehenden Nachteile in effizienter Weise zu vermeiden bzw. zumindest im Wesentlichen abzuschwächen.

Besonders gute Eigenschaften werden erhalten, wenn erfindungsgemäß rezyklierte Kohlenstofffasern zum Einsatz kommen. Derartig rezyklierte Kohlenstofffasern können beispielsweise aus kohlenstofffaserverstärkten Kunststoffen (CFKs) gewonnen werden, insbesondere mittels Pyrolyse. Derartige rezyklierte Kohlenstofffasern weisen bei der Einarbeitung in Kunststoffe ein besonders vorteilhaftes Verhalten, insbesondere in Bezug auf die homogene Einarbeitung und die rheologischen Eigenschaften der resultierenden Verbundstoffe, auf.

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung aber nicht beschränken sollen.

### Ausführungsbeispiele:

Die besonderen Vorteile der Erfindung sind im Folgenden am Beispiel der Herstellung und der Einarbeitung von Kohlenstofffaserpellets und Kohlenstofffasergranulaten in Kunststoffe beschrieben.

### 1. Herstellung kohlenstofffaserhaltiger Pellets und Granulate

Als Ausgangsmaterialien für die Herstellung der kohlenstofffaserhaltigen Pellets und Granulate werden einerseits Kohlenstoffprimärfasern ohne Schlichtmittel (d.h. Kohlenstoffrohfasern bzw. virgin fibres) und andererseits rezyklierte Kohlenstofffasern eingesetzt.

Als Kohlenstoffprimärfasern werden Kohlenstofffasern vom Typ Panex® 35 von Zoltek Companies Inc., St. Louis, Vereinigte Staaten von Amerika, verwendet.

Die rezyklierten Kohlenstofffasern werden aus kohlenstofffaserverstärkten Kunststoffabfällen (CFK-Abfällen), wie sie beispielsweise im Flugzeugbau (z. B. Flugzeugtragflächen) oder bei Windkrafträdern (z. B. Windflügel) anfallen, erhalten, wobei die Rezyklierung entsprechend dem in den zu derselben Patentfamilie gehörenden Druckschriften WO 2009/092064 A1, EP 2 152 487 B2 sowie US 2010/189629 A1 beschriebenen Verfahren durchgeführt wird. Zu diesem Zweck werden CFK-Abfälle einer thermischen bzw. pyrolytischen Behandlung in einem Pyrolyseofen unterzogen, bei welchem die Kunststoffmatrix pyrolytisch entfernt wird, so dass am Ende des Prozesses reine, d. h. kunststofffreie rezyklierte Kohlenstofffasern resultieren.

Die Zerkleinerung der Kohlenstofffasern erfolgt üblicherweise durch Hacken (Chopping) in einer hierfür üblichen, dem Fachmann an sich bekannten Schneidevorrichtung, wobei die Zerkleinerung grundsätzlich im Nass- oder Trockenverfahren erfolgen kann. Durch mehrfache Zerkleinerung, insbesondere mehrfaches Hacken, werden die gewünschten Faserlängen eingestellt, wie sie nachfolgend im Einzelnen spezifiziert sind.

Für die Herstellung der Pellets genügt im Allgemeinen ein zweifaches Hacken der Ausgangsfasern, um die gewünschte Faserlänge einzustellen, während für die Herstellung der Granulate die zuvor zerkleinerten, insbesondere gehackten Kohlenstofffasern zusätzlich einem anschließenden Mahlvorgang (Milling), insbesondere durch Verwendung von Mühlen, wie Hammermühlen, Pralltellermühlen, Siebkorbmühlen oder dergleichen, unterzogen werden, so dass extrem kurze Faserlängen resultieren, wie sie nachfolgend gleichermaßen spezifiziert sind.

Auf Basis des zuvor beschriebenen Zerkleinerungsvorgangs lassen sich die Längen der Kohlenstofffasern auf die gewünschte Spezifikation einstellen bzw. sozusagen maßschneidern. Zerkleinerte rezyklierte Kohlenstofffasern mit geeigneten Maßen sind aber auch kommerziell verfügbar, beispielsweise von der ELG Carbon Fibre Limited, Coseley, Großbritannien.

Die Spezifikation der jeweiligen zerkleinerten Kohlenstofffasern, welche für die Herstellung der kohlenstofffaserhaltigen Partikel in Form von Pellets und Granulaten im Rahmen der vorliegenden Erfindung verwendet werden, ist in der nachstehenden Tabelle 1 angegeben.

**Tabelle 1: Spezifikationen der eingesetzten Kohlenstofffasern**

| Kohlenstofffasern | Art Zerkleinerung | Faserlänge | Mittlerer Faserdurchmesser |
|---|---|---|---|
| Primärfasern¹ | Hacken | 10 - 20 mm (nominal) | 7 - 8 µm |
| Primärfasern² | Hacken und Vermahlen | 80 - 120 µm (mittlere) | 7 - 8 µm |
| Rezyklierte Fasern¹ | Hacken | 5 - 20 mm (nominal) | 7 - 8 µm |
| Rezyklierte Fasern² | Hacken und Vermahlen | 80 - 120 µm (mittlere) | 7 - 8 µm |

| | | | |
|---|---|---|---|
| ¹Kohlenstofffasern für Pelletherstellung; ²Kohlenstofffasern für Granulatherstellung. | | | |

### a) Herstellung kohlenstofffaserhaltiger Pellets

Die zuvor spezifizierten, mittels Hacken zerkleinerten Kohlenstofffasern werden in einer Konditionieranlage jeweils mit etwa 6 Gew.-%, bezogen auf die Menge der eingesetzten Kohlenstofffasern, eines Bindemittels versetzt, insbesondere besprüht, und anschließend in einer Pelletiermaschine in dem Fachmann an sich bekannter Weise zu Pellets mit Abmessungen von etwa 5 mm x 5 mm (Pelletdurchmesser x Pelletlänge) verarbeitet. Nach optionaler Trocknung bei 120 °C für etwa 1 Stunde werden die kohlenstofffaserhaltigen Pellets erhalten. Als Bindemittel werden alternativ einerseits ein silanbasiertes Bindemittel (erfindungsgemäß; Alkoxysilan, insbesondere Aminoalkoxysilan, vorzugsweise auf Basis einer kommerziell verfügbaren Mischung von Aminoalkylmethoxysilan, N,N-bis(3-(trimethylsiloxy)propyl)-1,2-ethandiamin und N,N'-bis(3-(trimethylsiloxy)propyl)-1,2-ethandiamin) sowie andererseits jeweils Bindemittel auf Basis von polymeren organischen Harzen (nichterfindungsgemäß; Epoxidharz, Polyurethanharz, Polyacrylatharz).

Es werden jeweils Pellets der folgenden Spezifikation gemäß der nachfolgenden Tabelle 2 erhalten.

**Tabelle 2: Eigenschaften der kohlenstofffaserhaltigen Pellets**

| | |
|---|---|
| Durchmesser Pellets | 5 mm |
| Mittlere Länge Pellets | 5 mm |
| Mittlerer Faserdurchmesser der Kohlenstofffasern | 7 - 8 µm |
| Fasernennlänge der Kohlenstofffasern | 3 - 8 mm |
| Schüttdichte der Pellets | 400 - 450 g/l |
| Menge Bindemittel in den Pellets | ca. 6 Gew.-% |

### b) Herstellung kohlenstofffaserhaltiger Granulate

Die zuvor spezifizierten, mittels Hacken und Vermahlen zerkleinerten Kohlenstofffasern werden in einer bewegten Granulattrommel jeweils mit etwa 6 Gew.-%, bezogen auf die Menge der eingesetzten Kohlenstofffasern, eines Bindemittels versetzt, insbesondere besprüht, und anschließend in einer Granuliermaschine in dem Fachmann an sich bekannter Weise zu Granulaten mit Durchmessern von etwa 1 bis 8 mm verarbeitet. Nach optionaler Trocknung bei 120 °C für etwa 1 Stunde werden die kohlenstofffaserhaltigen Granulate erhalten. Als Bindemittel werden alternativ einerseits ein silanbasiertes Bindemittel (erfindungsgemäß; Alkoxysilan, insbesondere Aminoalkoxysilan, vorzugsweise auf Basis einer kommerziell verfügbaren Mischung von Aminoalkylmethoxysilan, N,N-bis(3-(trimethylsiloxy)propyl)-1,2-ethanediamin und N,N'-bis(3-(trimethylsiloxy)propyl)-1,2-ethanediamin) sowie andererseits jeweils Bindemittel auf Basis von polymeren organischen Harzen (nichterfindungsgemäß; Epoxidharz, Polyurethanharz, Polyacrylatharz).

Es werden jeweils Granulate der folgenden Spezifikation gemäß der nachfolgenden Tabelle 3 erhalten.

**Tabelle 3: Eigenschaften der kohlenstofffaserhaltigen Granulate**

| | |
|---|---|
| Durchmesser Granulate | 1 - 8 mm |
| Mittlerer Faserdurchmesser der Kohlenstofffasern | 7 - 8 µm |
| Mittlere Faserlänge der Kohlenstofffasern | 80 - 120 µm |
| Schüttdichte der Granulate | 200 - 250 g/l |
| Menge Bindemittel in den Granulaten | ca. 6 Gew.-% |

### c) Überblick über die hergestellten Pellets und Granulate

Die mit den zuvor beschriebenen Verfahren hergestellten Pellets und Granulate sind in der nachfolgenden Tabelle 4 zusammengefasst.

**Tabelle 4: Hergestellte Pellets und Granulate**

| Nummer | Form | Kohlenstofffasern | Bindemittel |
|---|---|---|---|
| a1* | Pellets | Primärfasern | silanbasiertes Bindemittel |
| a2* | Pellets | Rezyklierte Fasern | silanbasiertes Bindemittel |
| a3 | Pellets | Rezyklierte Fasern | Epoxidharz |
| a4 | Pellets | Rezyklierte Fasern | Polyurethanharz |
| a5 | Pellets | Rezyklierte Fasern | Polyacrylatharz |
| b1* | Granulate | Primärfasern | silanbasiertes Bindemittel |
| b2* | Granulate | Rezyklierte Fasern | silanbasiertes Bindemittel |
| b3 | Granulate | Rezyklierte Fasern | Epoxidharz |
| b4 | Granulate | Rezyklierte Fasern | Polyurethanharz |
| b5 | Granulate | Rezyklierte Fasern | Polyacrylatharz |

| | | | |
|---|---|---|---|
| *efindungsgemäß | | | |

### 2. Einarbeitung der kohtenstofffaserhattigen Pellets und Granulate in Kunststoffe (Compoundierung)

Die Einarbeitbarkeit sowie der Einfluss der Granulate und Pellets auf Verbundstoffe (Compounds) wird anhand von Polycarbonat (PC) als Kunststoffmatrix untersucht. Die zuvor hergestellten Granulate und Pellets können jedoch auch in andere thermoplastische und duroplastische Kunststoffe, wie Polyetheretherketone (PEEK), Polytetrafluorethylene (PTFE), Polyurethane (PUR), Methacrylatharze (MMA) etc., eingearbeitet werden.

In das Polycarbonat (PC) werden in einem hierfür üblichen, dem Fachmann an sich bekannten Schnecken-Compounder etwa jeweils 10 Gew.-%, bezogen auf die eingesetzte Menge an Polycarbonat (PC), der zuvor spezifizierten kohlenstofffaserhaltigen Pellets oder Granulate homogen eingearbeitet, so dass ein faserhaltiger Verbundstoff (Compound) erhalten wird. Als Vergleich werden ebenfalls die für die Herstellung der Pellets und Granulate verwendeten zerkleinerten Kohlenstofffasern eingearbeitet. Für jeden auf diese Weise erhaltenen Verbundstoff wird jeweils die Schmelze-Volumenfließrate (MVR) nach ISO 1133 bestimmt.

Die erhaltenen Ergebnisse sind in Tabelle 5 zusammengefasst, wobei jeweils die Änderung des MVR-Wertes in Prozent im Vergleich zu dem Ausgangs-MVR-Wert des verwendeten reinen Polycarbonats (PC) ohne Fasern angegeben ist:

**Tabelle 5: Schmelz-Volumenfließrate (MVR) für Verbundstoffe**

| Nummer | Form | Kohlenstofffasern | MVR [cm³/10min] |
|---|---|---|---|
| | | Rezyklierte Fasern (gehackt)** | - 41 % |
| | | Rezyklierte Fasern (gehackt und gemahlen)** | - 40 % |
| | | Primärfasern (gehackt)** | - 49 % |
| | | Primärfasern (gehackt und gemahlen)** | - 46 % |
| a1* | Pellets | Primärfasern (gehackt) | - 4 % |
| a2* | Pellets | Rezyklierte Fasern (gehackt) | - 2 % |
| a3 | Pellets | Rezyklierte Fasern (gehackt) | - 30 % |
| a4 | Pellets | Rezyklierte Fasern (gehackt) | - 27 % |
| a5 | Pellets | Rezyklierte Fasern (gehackt) | - 20 % |
| b1* | Granulate | Primärfasern (gehackt und gemahlen) | - 3 % |
| b2* | Granulate | Rezyklierte Fasern (gehackt und gemahlen) | - 1 % |
| b3 | Granulate | Rezyklierte Fasern (gehackt und gemahlen) | - 29 % |
| b4 | Granulate | Rezyklierte Fasern (gehackt und gemahlen) | - 25 % |
| b5 | Granulate | Rezyklierte Fasern (gehackt und gemahlen) | - 20 % |

| | | | |
|---|---|---|---|
| * erfindungsgemäß ** ohne Bindemittel | | | |

Es wurde überraschend gefunden, dass die rheologischen Eigenschaften, insbesondere die Fließeigenschaften des Polycarbonats (PC) durch die Einarbeitung der erfindungsgemäßen kohlenstofffaserhaltigen Pellets und Granulate zumindest im Wesentlichen unbeeinflusst bleiben, während die Einarbeitung von gehackten oder gemahlenen Kohlenstofffasern die Fließrate des Polycarbonats signifikant erniedrigt. Eine signifikante Erniedrigung der Fließrate des Verbundstoffes (Compound) erschwert jedoch dessen Weiterverarbeitung, insbesondere in Spritzgießverfahren oder dergleichen.

Weiterhin zeigen die Pellets und Granulate aus rezyklierten Kohlenstofffasern einen weniger starken Einfluss auf die Fließrate des Polycarbonats (PC) im Vergleich zu Pellets und Granulaten aus Primärfasern. Ohne sich auf eine bestimmte Theorie zu beschränken, ist die bessere Benetzbarkeit auf die hydrophilen bzw. wasseraufnehmenden Oberflächeneigenschaften sowie die rauhere Oberflächenstruktur der durch die Rezyklierung erhaltenen Kohlenstofffasern zurückzuführen. Eine signifikante Erniedrigung der Fließrate von Polycarbonat (PC) wurde ebenfalls erhalten, wenn als Bindemittel Epoxidharz, Polyurethanharz und Polyacrylatharz eingesetzt werden.

Somit gewährleistet die Verwendung eines silanbasierten Bindemittels im Rahmen der vorliegenden Erfindung eine ausreichende Vernetzung der Kohlenstofffasern zu Pellets oder Granulaten, welche nicht nur eine gute Handhabbarkeit und Dosierbarkeit aufweisen, sondern auch eine homogene Einarbeitung in die Kunststoffmatrix erlauben. Zudem wird eine signifikante Erniedrigung der Fließrate der Kunststoffmatrix, welche die Weiterverarbeitung erschwert, bei Einarbeitung der erfindungsgemäßen kohlenstofffaserhaltigen Granulate und Pellets vermieden.

## Patentansprüche

1. Kohlenstofffaserhaltige Partikel, vorzugweise in Form von Granulaten oder Pellets, insbesondere für die Herstellung von kohlenstofffaserhaltigen Materialien, vorzugsweise kohlenstofffaserhaltigen Kunststoffen,
wobei die kohlenstofffaserhaltigen Partikel
- Kohlenstofffasern, insbesondere in zerkleinerter Form, und
- mindestens ein silanbasiertes Bindemittel
enthalten.

2. Kohlenstofffaserhaltige Partikel nach Anspruch 1, wobei die kohlenstofffaserhaltigen Partikel zumindest im Wesentlichen staubfrei, bevorzugt staubfrei, sind.

3. Kohlenstofffaserhaltige Partikel nach Anspruch 1 oder 2, wobei die Kohlenstofffasern innerhalb der Partikel eine isotrope und/oder multidirektionale und/oder zufallsorientierte Ausrichtung aufweisen.

4. Kohlenstofffaserhaltige Partikel nach einem der vorangehenden Ansprüche, wobei die Kohlenstofffasern als rezyklierte Kohlenstofffasern vorliegen,
insbesondere wobei die rezyklierten Kohlenstofffasern aus kohlenstofffaserverstärkten Kunststoffen (CFK) gewonnen sind, insbesondere pyrolytisch und/oder mittels pyrolytischer Zersetzung der Kunststoffmatrix.

5. Kohlenstofffaserhaltige Partikel nach einem der vorangehenden Ansprüche, wobei die kohlenstofffaserhaltigen Partikel in Form eines rieselfähigen Materials vorliegen und/oder in rieselfähiger Form vorliegen.

6. Kohlenstofffaserhaltige Partikel nach einem der vorangehenden Ansprüche, wobei die kohlenstofffaserhaltigen Partikel eine Schüttdichte im Bereich von 150 bis 750 g/l, insbesondere 175 bis 700 g/l, vorzugsweise 180 bis 600 g/l, aufweisen.

7. Kohlenstofffaserhaltige Partikel nach einem der vorangehenden Ansprüche,
wobei die Kohlenstofffasern in gehackter und/oder gemahlener Form vorliegen; und/oder wobei die Kohlenstofffasern eine mittlere Faserlänge im Bereich von 0,1 bis 5.000 µm,
insbesondere 1 bis 4.500 µm, vorzugsweise 10 bis 4.000 µm, bevorzugt 50 bis 3.500 µm, besonders bevorzugt 75 bis 3.250 µm, aufweisen; und/oder wobei die Kohlenstofffasern einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen.

8. Kohlenstofffaserhaltige Partikel nach einem der vorangehenden Ansprüche,
wobei die kohlenstofffaserhaltigen Partikel das silanbasierte Bindemittel in einer Menge von 0,1 bis 40 Gew.-%, insbesondere 0,5 bis 30 Gew.-%, vorzugsweise 1 bis 20 Gew.-%, besonders bevorzugt 2 bis 15 Gew.-%, ganz besonders bevorzugt 3 bis 10 Gew.-%, bezogen auf die kohlenstofffaserhaltigen Partikel, aufweisen; und/oder
wobei die kohlenstofffaserhaltigen Partikel Kohlenstofffasern in einer Menge von 60 bis 99,9 Gew.-%, insbesondere 70 bis 99,5 Gew.-%, vorzugsweise 80 bis 99 Gew.-%, besonders bevorzugt 85 bis 98 Gew.-%, ganz besonders bevorzugt 90 bis 97 Gew.-%, bezogen auf die kohlenstofffaserhaltigen Partikel, aufweisen.

9. Kohlenstofffaserhaltige Partikel nach einem der vorangehenden Ansprüche,
wobei die kohlenstofffaserhaltigen Partikel eine Vielzahl von Kohlenstofffasern, insbesondere mindestens 10 Kohlenstofffasern, vorzugsweise mindestens 25 Kohlenstofffasern, bevorzugt mindestens 50 Kohlenstofffasern, besonders bevorzugt mindestens 75 Kohlenstofffasern, ganz besonders bevorzugt mindestens 100 Kohlenstofffasern, pro Partikel aufweisen; und/oder
wobei die kohlenstofffaserhaltigen Partikel eine Vielzahl von Kohlenstofffasern, insbesondere 10 bis 1.000.000 Kohlenstofffasern, vorzugsweise 25 bis 500.000 Kohlenstofffasern, bevorzugt 50 bis 100.000 Kohlenstofffasern, besonders bevorzugt 75 bis 50.000 Kohlenstofiffasern, ganz besonders bevorzugt 100 bis 10.000 Kohlenstofffasern, pro Partikel aufweisen.

10. Kohfenstofffaserhaltige Partikel nach einem der vorangehenden Ansprüche, wobei das silanbasierte Bindemittel die Kohlenstofffasern eines einzelnen Partikels zusammenhält und/oder miteinander verbindet, insbesondere miteinander vernetzt und/oder benetzt, vorzugsweise derart, dass Partikel resultieren und/oder die Kohlenstofffasern jeweils zu einzelnen Partikeln zusammengeführt und/oder verbunden sind.

11. Kohlenstofffaserhaltige Partikel nach einem der vorangehenden Ansprüche, wobei das silanbasierte Bindemittel ausgewählt und/oder ausgebildet ist derart, dass es zur Ausbildung von physikalischen und/oder chemischen Bindungen, insbesondere chemischen Bindungen, mit einer Kunststoffmatrix imstande ist.

12. Kohlenstofffaserhaltige Partikel nach einem der vorangehenden Ansprüche, wobei das silanbasierte Bindemittel mindestens eine polare und/oder hydrophile Gruppe aufweist, insbesondere ausgewählt aus Aminogruppen, Alkoxygruppen, Aryloxygruppen, Aralkyloxygruppen, Hydroxylgruppen, Thiolgruppen, Halogenen, Carboxylsäuregruppen, Carbonsäureestergruppen und/oder Ammoniumgruppen, insbesondere Aminogruppen und/oder Hydroxylgruppen, vorzugsweise primären Aminogruppen, sekundären Aminogruppen, tertiären Aminogruppen und/oder Hydroxylgruppen.

13. Kohlenstofffaserhaltige Partikel nach einem der vorangehenden Ansprüche,
wobei das silanbasierte Bindemittel mindestens ein Alkoxysilan, insbesondere ein mindestens eine polare und/oder hydrophile Gruppe enthaltendes Alkoxysilan, oder dessen Oligomer ist oder enthält, insbesondere wobei die polare und/oder hydrophile Gruppe ausgewählt ist aus Aminogruppen, Alkoxygruppen, Aryloxygruppen, Aralkyloxygruppen, Hydroxylgruppen, Thiolgruppen, Halogenen, Carboxylsäuregruppen, Carbonsäureestergruppen und/oder Ammoniumgruppen, insbesondere Aminogruppen und/oder Hydroxylgruppen, vorzugsweise primären Aminogruppen, sekundären Aminogruppen, tertiären Aminogruppen und/oder Hydroxylgruppen; und/oder
wobei das silanbasierte Bindemittel mindestens ein Alkoxysilan, insbesondere eine mindestens eine Aminogruppe enthaltendes Alkoxysilan, vorzugsweise ein Aminoalkylalkoxysilan, oder dessen Oligomer ist oder enthält; und/oder
wobei das silanbasierte Bindemittel mindestens eine sich von 1,2-Ethylendiamin ableitende Einheit enthält; und/oder
wobei das silanbasierte Bindemittel mindestens eine Alkoxygruppe, insbesondere eine Methoxy-, Ethoxy- oder Propoxygruppe, bevorzugt am Silanatom, enthält; und/oder
wobei das silanbasierte Bindemittel ein Molekulargewicht im Bereich von 100 bis 10.000 g/mol, insbesondere 150 bis 7.500 g/mol, vorzugsweise 175 bis 5.000 g/mol, besonders bevorzugt 200 bis 2.500 g/mol, aufweist; und/oder
wobei das silanbasierte Bindemittel außerdem mindestens einen weiteren Hilfsstoff enthält, insbesondere ausgewählt aus der Gruppe von Lösemitteln, Rheologiemodifizierungsmitteln, Entschäumern, pH-Regulatoren, Emulgatoren, Netzmitteln, Füllstoffen und Stabilisatoren.

14. Kohlenstofffaserhaltige Partikel nach einem der vorangehenden Ansprüche, wobei das silanbasierte Bindemittel mindestens eine Verbindung der allgemeinen Formel (I)
(R¹)(R²)N-[CH₂]ₙ-N(R³)(R⁴) (I)
oder deren Oligomer enthält oder darstellt,
wobei in der allgemeinen Formel (I) die Variable n für eine ganze Zahl von 1 bis 10, vorzugsweise 2, steht und die Reste R¹, R², R³ und R⁴, jeweils unabhängig voneinander, Wasserstoff oder einen organischen Rest R bezeichnen, jedoch mit der Maßgabe, dass R¹, R², R³ und R⁴ nicht alle gleichzeitig Wasserstoff darstellen und/oder dass mindestens ein Rest R¹, R², R³ und R⁴ von Wasserstoff verschieden ist,
wobei der organische Rest R der allgemeinen Formel
-X-Si(OR')(OR")(OR"')
entspricht, wobei der Rest X einen divalenten organischen Rest, insbesondere eine Alkylengruppe, vorzugsweise eine Methylen-, Ethylen-, Propylen- oder Butylengruppe, darstellt und die Reste R', R" und R"', jeweils unabhängig voneinander, einen Alkylrest, insbesondere einen Methyl-, Ethyl- oder Propylrest, vorzugsweise einen Methyl- oder Ethylrest, darstellen.

15. Kohlenstofffaserhaltige Partikel nach einem der Ansprüche 1 bis 14, wobei die kohlenstofffaserhaltigen Partikel in Form von Granulaten vorliegen.

16. Kohlenstofffaserhaltige Partikel nach Anspruch 15,
wobei die Granulate einen Durchmesser im Bereich von 0,1 bis 40 mm, insbesondere 0,2 bis 30 mm, vorzugsweise 0,4 bis 20 mm, bevorzugt 0,5 bis 10 mm, ganz besonders bevorzugt 0,75 bis 6 mm, aufweisen; und/oder
wobei die Granulate eine Schüttdichte im Bereich von 1 bis 800 g/l, insbesondere 10 bis 700 g/l, vorzugsweise 40 bis 600 g/l, bevorzugt 70 bis 500 g/l, besonders bevorzugt 100 bis 400 g/l, ganz besonders bevorzugt 175 bis 300 g/l, aufweisen; und/oder
wobei die Kohlenstofffasern in gemahlener Form vorliegen; und/oder
wobei die Kohlenstofffasern eine mittlere Faserlänge im Bereich von 0,1 bis 1.000 µm, insbesondere 1 bis 800 µm, vorzugsweise 5 bis 500 µm, bevorzugt 10 bis 400 µm, besonders bevorzugt 25 bis 300 µm, ganz besonders bevorzugt 50 bis 250 µm, noch mehr bevorzugt 75 bis 150 µm, aufweisen; und/oder
wobei die Kohlenstofffasern einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen.

17. Kohlenstofffaserhaltige Partikel nach einem der Ansprüche 1 bis 14, wobei die kohlenstofffaserhaltigen Partikel in Form von Pellets, vorzugsweise mit zumindest im Wesentlichen zylindrischer Form, vorliegen.

18. Kohlenstofffaserhaltige Partikel nach Anspruch 17,
wobei die Pellets einen Durchmesser im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen; und/oder
wobei die Pellets eine Länge im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen, und/oder
wobei die Pellets eine Schüttdichte im Bereich von 1 bis 1.000 g/l, insbesondere 10 bis 800 g/l, vorzugsweise 100 bis 700 g/l, bevorzugt 200 bis 600 g/l, besonders bevorzugt 300 bis 500 g/l, ganz besonders bevorzugt 350 bis 475 g/l, aufweisen; und/oder
wobei die Kohlenstofffasern in gehackter Form vorliegen; und/oder
wobei die Kohlenstofffasern eine mittlere Faserlänge im Bereich von 0,01 bis 100 mm, insbesondere 0,1 bis 50 mm, vorzugsweise 0,2 bis 25 mm, bevorzugt 0,5 bis 15 mm, besonders bevorzugt 1 bis 10 mm, ganz besonders bevorzugt 2 bis 5 mm, aufweisen; und/oder
wobei die Kohlenstofffasern einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen.

19. Verfahren zur Herstellung von kohlenstofffaserhaltigen Partikeln gemäß einem der Ansprüche 1 bis 18, wobei Kohlenstofffasern, insbesondere in zerkleinerter Form, zunächst mit mindestens einem silanbasierten Bindemittel in Kontakt gebracht werden und nachfolgend die mit dem silanbasierten Bindemittel in Kontakt gebrachten Kohlenstofffasern zu diskreten Partikeln geformt werden.

20. Verfahren nach Anspruch 19,
wobei die Kohlenstofffasern in zerkleinerter, insbesondere in gehackter und/oder gemahlener Form eingesetzt werden; und/oder
wobei die Partikel in Form von Pellets oder Granulaten erhalten werden bzw. wobei die Formung der diskreten Partikel mittels Pelletierung oder Granulierung erfolgt; und/oder
wobei das silanbasierte Bindemittel in einer Menge von 0,1 bis 40 Gew.-%, insbesondere 0,5 bis 30 Gew.-%, vorzugsweise 1 bis 20 Gew.-%, besonders bevorzugt 2 bis 15 Gew.-%, ganz besonders bevorzugt 3 bis 10 Gew.-%, bezogen auf die resultierenden kohlenstofffaserhaltigen Partikel, eingesetzt wird; und/oder
wobei die diskreten Partikel abschließend getrocknet und/oder gehärtet werden.

21. Verfahren nach Anspruch 19 oder 20, **gekennzeichnet durch** eines oder mehrere der Merkmale der Ansprüche 1 bis 18.

22. Verwendung von kohlenstofffaserhaltigen Partikeln gemäß einem der Ansprüche 1 bis 18 als Additiv, insbesondere für Kunststoffe, Baustoffe oder zementäre Systeme.

23. Verwendung von kohlenstofffaserhaltigen Partikeln gemäß einem der Ansprüche 1 bis 18 zur Herstellung von kohlenstofffaserhaltigen Kunststoffen.

24. Verwendung von kohlenstofffaserhaltigen Partikeln gemäß einem der Ansprüche 1 bis 18 zur Compoundierung, insbesondere zur Inkorporierung in Kunststoffen.
